# EUROPEAN PATENT APPLICATION

(11) **EP 2 362 626 A1**
(43) Date of publication of application: **31.08.2011**
(21) Application number: 10250254.9
(22) Date of filing: 15.02.2010
(51) Int. Cl.: H04M 19/08, H04B 10/00, H04M 1/725

(54) **Telephone equipment powering a network node**

(71) Applicant: British Telecommunications public limited company, London, Greater London EC1A 7AJ (GB)
(72) Inventor: The designation of the inventor has not yet been filed
(74) Representative: Lidbetter, Timothy Guy Edwin

(57) **Abstract**

Telephone customer equipment such as a cordless base station 1 having a connection to a mains power supply 12 is configured so that it can supply power to a telephone connection 5 in order to provide a reverse feed facility to a fibre-fed network distribution point 8. The equipment is also provided with a battery 17 to provide an emergency power supply to the customer equipment 1 and distribution point 8 in the event of failure of the mains supply 12.

## Description

This invention relates to telephone equipment of the kind used to connect user terminals to an exchange line on customer premises. In particular it is suited for incorporation in a base station for physical connection to an exchange line, and wireless connection to one or more cordless telephones. In particular, it is suited to connection to exchange lines using digital subscriber line (DSL) technology, in which part of the connection to the exchange is made by means other than an electrical connection, for example by optical fibre or wireless technology.

Digital subscriber line (DSL) technology is approaching the limits of what can be achieved in terms of transmission over the access network (the last link in a telecommunications network between the subscriber's premises and the exchange, consisting predominantly of twisted-pair copper wires). To achieve further increases in achievable data rates requires that the electronics for providing the DSL technology be installed closer to the subscriber, for example, in a network node at the cross connection point or the distribution point. The cross connection point is a node, usually located in a roadside cabinet at which a larger feeder cable containing a number of transmission lines diverges into a plurality of smaller distribution cables each containing a smaller number of transmission lines. Distribution points are nodes, often mounted on, or close to, the poles from which are suspended drop wires passing into individual premises, at which point several distribution cables are distributed to individual subscriber transmission lines. The cross connections points and distribution points are sometimes respectively known as 'cabinets' and 'poles', indicative of their locations.

In conventional telephony these nodes are simple electrical connections requiring no power supply, other than that provided from the exchange side to power the customer premises equipment (ringing current etc). However, the deployment of electronic equipment in these network nodes requires the provision of power to the electronics at a low cost and with a high reliability.

One solution is to requisition a power supply from a public utility, e.g. by tapping into street lighting circuits, but this can be very expensive. Alternatively, power can be fed directly to the network node from the exchange over a twisted-pair copper wire. However, network nodes are usually too far from the exchange to make this a viable option. This is because the resistance of the wire-pairs (which increases with distance from the exchange) is often much higher than the DC input impedance of the network node electronics. This results in more power being dropped across the wire-pairs and therefore less power being available to the network node electronics. Moreover, if the connection to the exchange is not by a wired connection, but uses electromagnetic waves (either using optical fibre or, more particularly, using radio transmissions), a separate wired connection would have to be supplied.

Traditional telephone handsets require no separate power supply, and all power for ringing current, dialling signals etc, have traditionally been supplied from the exchange line. This had the added advantage in the early years of telephony that the service could be supplied to premises which did not have a power supply and it remains a requirement that a "lifeline" telephony service remains available in the event of an interruption to the local electricity supply. However, modern user equipment, such as facsimile machines, answering machines, cordless base stations, computer modems and routers, require more power than can be delivered over an exchange line, and therefore need a power supply on the customer premises. Two examples are described in United States patent US5801513 and United Kingdom patent application GB2352887, which both describe base stations for cordless telephone systems. They solve the "lifeline" requirement by incorporating a battery which is normally kept charged from an external power supply so that, in the event of a failure of that power supply, the base station can continue to operate for long enough for the power outage to be reported, or other assistance summoned.

It has been suggested (see "Powering Active Nodes in Active Loops", Fisher, S., International Conference on Communications - Conference Record, vol. 2, 23 June 1991, pages 929-935) that power may be supplied to network node electronics from a subscriber's power supply. However, this conflicts with the conventional "POTS" (plain old telephone service) arrangement in which DC power for the customer equipment is supported from the network over a single twisted-pair copper wire. Moreover, in conventional telephony a number of signalling states are each represented by a DC voltage or line condition. Supplying power from the customer end requires these states to be isolated from the power feed, using either a second twisted-pair copper wire for the DC power feed from the subscriber to the network node electronics (often not available or expensive to provide) or the provision of voice support using DSL, known as "voice over DSL" or VoDSL. Moreover, if VoDSL is used and the power to the subscriber premises fails, causing the DSL service to fail, the subscriber will be left without a voice telephony service.

It is also desirable that such service is available to all users in the event of failure of the more complex services. In addition, the network connections need to be compatible with other existing voice-band services, such as modems, faxes and alarm systems.

When DSL is provisioned in a neighbourhood, it is convenient that all subscriber lines in that neighbourhood be converted at the same time although some users will not require the DSL capabilities at the time of conversion. This avoids the need to maintain two separate systems, and also allows users to eventually make use of the DSL facilities without further modifications to the network.

There is also a problem in providing power for non-DSL lines. At least initially, it would not be possible for POTS-only lines to be powered from the power delivered by the broadband customers connected to the same remote Service Unit. The powering requirement for the CPE equipment and corresponding circuitry in the network would not be negligible until the proportion of non-DSL lines falls to a very low proportion of the total. An alternative means of powering the network nodes is therefore required. Users only requiring standard telephony (POTS) are likely to include the less wealthy, and groups less able to cope with changes in technology, and it is undesirable that such users be inconvenienced, or incur expenditure, for the benefit of users of more complex and expensive services. Ideally, the service should continue to operate in a way that is familiar to them, and without complex changes to equipment.

ETSI technical report TR 102 629 v 1.1.1 describes the requirement for reverse power feed from the CPE to a fibre-fed remote node located in the access network. It does not support the simultaneous provision of POTS and reverse power feed on the same wires. It is therefore necessary to provide a carrier for the POTS signalling. International patent application W02005/043880 (British Telecommunications plc) describes a system in which the dc signalling is shifted into another part of the baseband spectrum but the basic analogue audio signal remains essentially untouched. At the CPE the signalling is restored and POTS is presented as normal. Alternatively, the POTS traffic can be reformatted into a digital signal using a voice codec to be transmitted within its own designated spectrum. As a third possibility, POTS may be provided using a terminal adapter converting the signal to VoIP, allowing it to be carried over the connection using the broadband DSL capability. In each case the signal can be re-converted to analogue at the remote end or, in the VoIP application, carried to a VoIP handset.

However, all these applications require the presence of a power source at the customer premises. Moreover, provision needs to be made for the service to remain working during power outages at the CPE. The loss of one or two subscriber lines, for example because of a fault on the customer's wiring, would not prevent the operation of such a node, but in the event of a problem in the local electricity distribution network, affecting all the customer premises served by a node, the node itself would be disabled. It is therefore desirable that in the event of a power failure there is a backup arrangement suitable to power the remote node in at least a low-power mode.

There is therefore a problem in making an FttDP connection to a user connection requiring only POTS service, such that these connections are capable to receive calls via a standard POTS interface and standard telephone. In particular a reliable power supply is required for such a line. Conversely, it is commercially and practically inconvenient to require customers to install fully-compliant Voice over IP equipment just to allow them to continue to receive POTS service.

A compromise solution would be to provide the customer with a replacement network termination equipment (NTE) which provides reverse powering, allows POTS calls to be made/received, and also includes some battery back-up for life-line service. However, replacement of the network termination equipment requires attention of a skilled technician as it involves modification of the network provider's equipment.

The present invention provides an alternative approach. It provides a communications device comprising an adapter for connection to a network, and data converter for conversion of data between a first format usable by the network and a second format usable by the user or by ancillary equipment, and further comprising an electricity supply unit for receiving power from an external power source and delivering it to the network connection.

Preferably the device incorporates a battery chargeable from the electricity supply unit, and arranged for delivery of power to the network connection to maintain network operation in the event of a power failure.

In the preferred embodiment the device is a base station for a cordless telephony system, the said second data format being usable over an interface between a cordless handset and the base station. This configuration allows the user to continue to use a cordless handset in a conventional manner, whilst providing connection to a DSL-based network. The base station may also be provided with electrical contacts for engagement with co-operating contacts on a handset, the electricity supply unit being arranged to deliver power to a handset when it is in electrical communication with the electrical contacts on the base station.

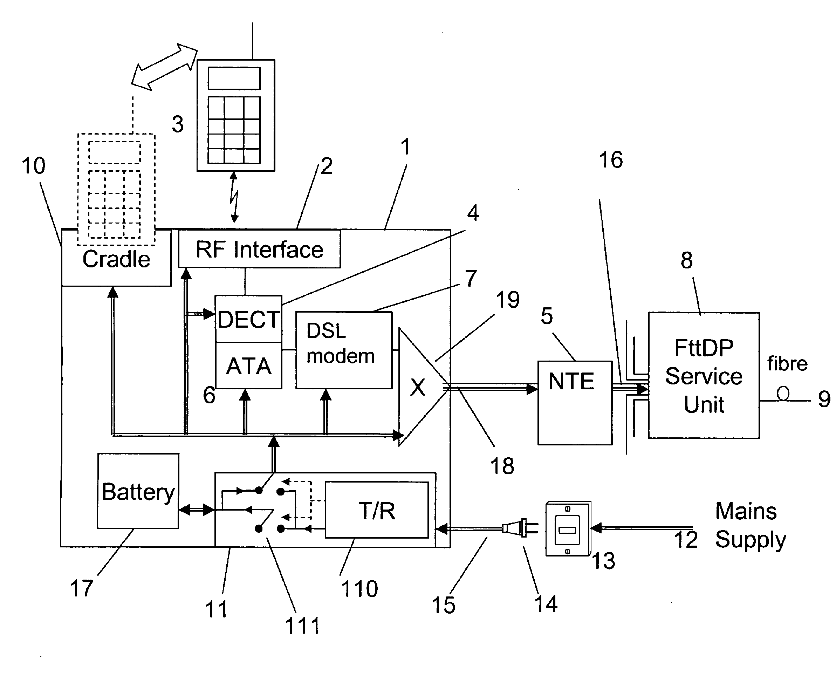

An embodiment of the invention will now be described, by way of example, with reference to the drawing. The drawing is a schematic representation of a cordless base station according to the invention, together with the various interfaces with which it is in connection.

The cordless base station 1 provides an RF interface 2 for wireless communication with a handset 3. The RF interface provides the means for modulating and demodulating a signal on an RF carrier, and also handles paging functions etc. There is a A/D converter 4 which provides an interface between the digital signals carried over the wireless connection (for example using the DECT standard) and an analogue signal for carrying over the PSTN. In a conventional cordless base station, this analogue signal would be passed to a conventional analogue (POTS) telephone connection (POTS) through a network termination unit 5, typically mounted on a wall in the house and having a wired connection to the local exchange and thus to the rest of the telephone network.

In the present instance, the analogue signal is instead fed to an analog telephony adapter (ATA) 6 which converts the signals to a digital form such as VoIP (Voice over Internet Protocol) suitable for transmission over a digital subscriber line (DSL). The ATA also provides the signalling information and acts as a residential gateway by communicating the signalling using Internet Protocol (IP) to a Media Gateway Controller located elsewhere in the network.

The functions of the A/D converter 4 and analogue telephony adapter 6 may be combined in a single unit converting directly between the DECT and VoIP forms

The digitised voice data is then passed to a DSL modem 7 which transports the physical layer bits between terminal and a fibre-fed service unit 8.

The service unit 8 is located at a distribution point or other termination of the optical connection 9 and acts as the electro-optical interface between the optical fibre connection 9 and the wired "final drop" connections of several users (only the user 5 is shown. The base station 1 also includes an electrical charging point 10 for delivering electrical power to a cordless handset 3 when electrically coupled to it, as shown in dotted outline. The handset 3 includes a battery which is charged by the electrical supply when connected to the charging point, and is used to power the handset when removed from the charging point for use.

The charging point 10, and the other base station functions 2, 4, 6, 7, all require electrical power and for this purpose a power supply unit 11 is provided, which draws mains power 12 from a supply socket 13 through a conventional plug 14 and power lead 15. The power supply unit includes a transformer and rectifier 110 to convert the mains power to the appropriate voltages for the various components 2, 4, 6, 7, 10, and may also include protection against overload and other conditions.

The device therefore combines an Analogue Telephony Adapter with a DECT base-station. However, the fibre-fed service unit 8 also requires a power supply, which cannot be provided from the exchange end.

In the present invention, the base station is modified to provide reverse power back to the remote service unit by way of the NTE. To this end, the power supply 11 is arranged to feed power onto the local loop connection 16, by way of a combiner 19 and the network termination 5 to the service unit 8 at the fibre/wire interface. The DSL signalling is carried as a modulation on the d.c delivered by the power supply.

As the power requirement for the service unit 8 is shared between several users, the amount drawn from any individual user can be a very small trickle current, running whether or not the line is currently in use. The current drawn from each line will be, to a first approximation, inversely proportional to the number of customer lines connected to the service unit, and proportional to the amount of traffic carried by the service unit, although adjustments may be made to the power drawn from each unit as described in the applicant's co-pending applications W02009/138710 and W02009/138711.

The device also incorporates a battery-backed internal power supply 17 to provide a "lifeline" service in the event of failure of the mains supply 12. Battery power would only need to be sufficient to provide back up power substantially less than that required for DSL, but sufficient for the NTE/CPE to operate POTS, as well as a small proportion of the power required by the remote service unit at the distribution point. The power supply unit 11 includes automatic switches 111 controlled in response to the presence or absence of power at the mains feed 15 to switch between a first mode in which power is delivered from the mains supply to the battery 17 and other electrical components 2,4,6,7,10,19 when mains power is available, to a second mode in which power is delivered from the battery 17 to the other electrical components 2,4,6,7,10,19 when no input is detected from the mains feed 15.

The power supply unit 11 can be configured to limit the current drawn when running on battery power. This is particularly useful if the power failure is specific to the individual user's supply 12, as it will limit the current drawn from the user's own device whilst allowing the service unit 8 to continue to draw power for DSL services from other user terminations which have not been affected by the power loss. Only if the power failure is more general, affecting several users, will the service unit 8 revert to POTS-only service in order to conserve power. The bitrate requirement to support a single POTS line over a DSL connection would be of the order 110-120kbps,which is minimal compared with the typical capability of a DSL modem, if approximately 100Mbps at full-rate. Consequently the power required to operate the modem at the rate necessary to support a "lifeline" POTS capability should be minimal.

The invention modifies an existing customer device which is already powered to provide the reverse power feed required for a FttDP service node. This minimises the impact on the user and requires no installation expertise other than to plug the device 1 into the mains electricity socket 13 and NTE connections 5 .

## Claims

1. A communications device (1) comprising an connector (18) for connection to a network, a data converter (6, 7) for conversion of data between a first format usable by the network and a second format usable by the user or by ancillary equipment (3), and further comprising an electricity supply unit (11) for receiving power from an external power source (12, 13) and delivering it to the network connection.

2. A communications device according to claim 1, incorporating a battery (17) chargeable from the electricity supply unit (11), and arranged for delivery of power to the network connection (18) to maintain network operation in the event of a power failure.

3. A communications device according to claim 1 or claim 2, wherein the device (1) is a base station for a cordless telephony system, the said second data format being usable over an interface (2) between a cordless handset (3) and the base station (1).

4. A communications device according to claim 3, wherein the base station (1) is provided with electrical contacts (10) for engagement with co-operating contacts on a cordless handset (3), the electricity supply unit (11) being arranged to deliver power to the handset when it is in electrical communication with the electrical contacts on the base station.
